(19) **Europäisches Patentamt**
**European Patent Office**
**Office européen des brevets**

(11) **EP 1 734 276 B1**

(12) **EUROPÄISCHE PATENTSCHRIFT**

(45) Veröffentlichungstag und Bekanntmachung des Hinweises auf die Patenterteilung:
**07.01.2009   Patentblatt 2009/02**

(51) Int Cl.:
*F16F 9/52* *(2006.01)*       *F16F 9/02* *(2006.01)*

(21) Anmeldenummer: **06012422.9**

(22) Anmeldetag: **16.06.2006**

(54) **Gasfeder**

Gas spring

Ressort à gaz

(84) Benannte Vertragsstaaten:
**DE ES FR GB IT**

(30) Priorität: **16.06.2005   DE 102005028015**
**11.08.2005   DE 102005038115**

(43) Veröffentlichungstag der Anmeldung:
**20.12.2006   Patentblatt 2006/51**

(60) Teilanmeldung:
**07006976.0 / 1 795 777**

(73) Patentinhaber: **Stabilus GmbH**
**56070 Koblenz (DE)**

(72) Erfinder:
• **Ansel, Holger**
**56218 Mülheim-Kärlich (DE)**
• **Bröder, Meik**
**56340 Dachsenhausen (DE)**
• **Bonnekessel, Stefan**
**56068 Koblenz (DE)**
• **Enders, Stephan**
**56072 Koblenz (DE)**
• **Köhl, Alexander**
**54290 Trier (DE)**
• **Maßmann, Rainer**
**53119 Bonn (DE)**
• **Mintgen, Rolf**
**56743 Thuer (DE)**
• **Nadler, Marc**
**56170 Bendorf (DE)**
• **Nieratschker, Willi Dr.**
**56072 Koblenz (DE)**
• **Sauer, Rainer**
**56727 Mayen (DE)**

(74) Vertreter: **Herzog, Markus et al**
**Weickmann & Weickmann**
**Patentanwälte**
**Postfach 86 08 20**
**81635 München (DE)**

(56) Entgegenhaltungen:
DE-A1- 2 511 289          DE-A1- 3 141 295
DE-A1- 10 052 864        US-A- 4 613 115

**Beschreibung**

Die Erfindung betrifft eine Gasfeder mit einem Arbeitszylinder, der zusammen mit einer Ausgleichskolbenanordnung einen mit einem Arbeitsmedium gefüllten Arbeitsraum umgrenzt, und einer Arbeitsstange, die durch eine Öffnung des Arbeitszylinders verschiebbar in den Arbeitsraum hineinragt, wobei die Ausgleichskolbenanordnung von dem Druck des Arbeitsmediums und dem Druck eines in einem Ausgleichsraum vorgesehenen, sich bei Temperaturerhöhung ausdehnenden Ausgleichsmediums in einem das Volumen des Arbeitsraum vergrößerndem Sinne und von einem in einem Rückstellraum vorgesehenen Rückstellmedium in einem das Volumen des Arbeitsraum verkleinerndern Sinne beaufschlagt ist.

Derartige Gasfedern, deren Ziel es ist, die Temperaturabhängigkeit der Gasfedercharakteristik durch Einsatz des Ausgleichsmediums zu kompensieren, sind im Stand der Technik bekannt. Beispielhaft sei auf die DE 31 41 295 A1 verwiesen.

Hinsichtlich der als Ausgleichsmedium einsetzbaren Stoffe verweist die DE 31 41 295 A1 ganz pauschal auf "spezielle Flüssigkeit". Demgegenüber ist in der dem gleichen Sachgebiet entstammenden DE 25 11 289 A1 ausdrücklich Hydrauliköl als Ausgleichsmedium genannt. Gemäß der US 4,613,115 schließlich werden Zweiphasen-Systeme bestimmter Stoffe als Ausgleichsmedium eingesetzt, genauer gesagt Systeme, bei denen die flüssige und die gasförmige Phase des betrachteten Stoffes bei den jeweiligen Druck-Temperatur-Bedingungen koexistieren.

Alle diese Ausgleichsmedien haben sich in der Praxis jedoch als nicht in jeder Hinsicht zufriedenstellend erwiesen. Insbesondere verfügt das herkömmlich eingesetzte mineralische Öl über eine nicht zufriedenstellende nutzbare Volumenausdehnung in dem üblicherweise betrachteten Betriebszustandsfeld der Gasfeder zwischen einer Temperatur von etwa -30°C und einem Druck von etwa 50 bar einerseits und einer Temperatur von etwa +80°C und einem Druck von etwa 440 bar andererseits. Unter der "nutzbaren Volumenausdehnung" wird im Zusammenhang mit der vorliegenden Erfindung die Differenz der von einem Temperaturanstieg hervorgerufenen Volumenerhöhung und der durch den gleichzeitigen Druckanstieg hervorgerufenen Volumenminderung verstanden.

Lediglich der Vollständigkeit halber sei zum technologischen Hintergrund noch auf die DE-A-100 52 864 hingewiesen.

Es ist daher Aufgabe der vorliegenden Erfindung, Gasfedern der eingangs genannten Art anzugeben, welche über eine verbesserte Kompensation der Temperaturabhängigkeit der Gasfedercharakteristik verfügen.

Diese Aufgabe wird erfindungsgemäß durch eine Gasfeder der eingangs genannten Art gelöst, bei welcher das Ausgleichsmedium so gewählt ist, dass seine kritische Temperatur zwischen einer ersten Temperatur und einer zweiten Temperatur liegt, wobei die erste Temperatur im Wesentlichen gleich der unteren Grenztemperatur eines Betriebstemperaturbereichs der Gasfeder ist, und wobei die zweite Temperatur die obere Grenztemperatur des Betriebstemperaturbereichs der Gasfeder um etwa 100°C übersteigt, und bei welcher die Beaufschlagungsfläche der Ausgleichskolbenanordnung durch das Ausgleichsmedium, die Beaufschlagungsfläche der Ausgleichskolbenanordnung durch das Arbeitsmedium, das Volumen des Arbeitsraums bei einer Auslegungstemperatur der Gasfeder, das Volumen des Ausgleichsraums bei der Auslegungstemperatur der Gasfeder und die die Ausgleichskolbenanordnung beaufschlagende Rückstellkraft des Rückstellmediums bei der Auslegungstemperatur der Gasfeder derart bemessen und aufeinander abgestimmt sind, dass bei einer die kritische Temperatur des Ausgleichsmediums nicht übersteigenden Betriebstemperatur der Gasfeder der Zustandspunkt des Ausgleichsmediums auf oder oberhalb der Dampfdruckkurve liegt.

Es ist das Verdienst der Erfinder, erkannt zu haben, dass es neben "klassischen" Flüssigkeiten, d.h. Flüssigkeiten, wie mineralischem Öl, deren Siedelinien fern des vorstehend genannten Betriebszustandsfelds liegen und die daher einerseits zwar im Wesentlichen inkompressibel sind, andererseits aber auch nur eine geringe Volumenausdehnung aufweisen, und Zweiphasen-Systemen, deren hauptsächlich von der Gasphase herrührende, hohe Volumenausdehnung durch die starke Kompressibilität der Gasphase wieder zunichte gemacht wird, noch eine dritte Gruppe von Stoffen gibt, die im fraglichen Betriebszustandsfeld zwar einerseits eine beachtliche Volumenausdehnung aufweisen, andererseits aber doch im Wesentlichen inkompressibel sind, so dass die Volumenausdehnung im Wesentlichen ungeschmälert zur Kompensation der Temperaturabhängigkeit der Gasfedercharakteristik genutzt werden kann. Die grundlegende Idee besteht darin, dass Flüssigkeiten kurz vor dem Sieden einerseits eine relativ große Volumenausdehnung aufweisen, andererseits aber auf Grund ihrer Eigenschaft, immer noch eine Flüssigkeit zu sein, im Wesentlichen inkompressibel sind. Stoffe, deren kritische Temperatur mehr als 100°C oberhalb der oberen Grenztemperatur des üblichen Betriebstemperaturbereichs von Gasfedern liegt, verfügen jedoch über keine die nutzbare Volumenausdehnung von mineralischem Öl deutlich übersteigende nutzbare Volumenausdehnung. Ferner haben die Erfinder erkannt, dass bei Stoffen, deren kritische Temperatur innerhalb des üblichen Betriebstemperaturbereichs von Gasfedern liegt und bei denen man bei Betriebstemperaturen oberhalb der kritischen Temperatur nicht mehr zwischen der gasförmigen und der flüssigen Phase unterscheiden kann, die Dichteverhältnisse doch so sind, dass das Verhalten dieser Stoffe in diesem Temperaturbereich im Wesentlichen dem Verhalten einer Flüssigkeit entspricht. Schließlich haben die Erfinder auch noch erkannt, dass es möglich ist, die Abmessungen der Gasfeder und die in der Gasfeder herrschenden Drücke so aufeinander abzustimmen, dass ein Übergang des jeweils verwendeten Ausgleichsmediums in den flüssig-gasförmigen Zweiphasen-Zustand zuverlässig verhindert werden kann.

Wenn im Zusammenhang mit der vorliegenden Erfindung davon gesprochen wird, dass der Zustandspunkt des Ausgleichsmediums oberhalb der Dampfdruckkurve liegt, so wird dabei auf die übliche Darstellung des Druck-Temperatur-Diagramms (p-T-Diagramm) Bezug genommen, und ist damit gemeint, dass das Ausgleichmedium in seiner flüssigen Phase vorliegt.

Vorteilhafterweise sollte die zweite Temperatur die obere Grenztemperatur des Betriebstemperaturbereichs der Gasfeder nur um etwa 60°C übersteigen. Am günstigsten ist es sogar, wenn die zweite Temperatur im Wesentlichen gleich der oberen Grenztemperatur des Betriebstemperaturbereichs der Gasfeder ist, d.h. wenn die kritische Temperatur des Ausgleichsmediums in dem Betriebstemperaturbereichs der Gasfeder liegt.

In Weiterbildung der Erfindung kann das Ausgleichsmedium in Abhängigkeit der jeweiligen Einsatzbedingungen aus der die Stoffe Kohlendioxid ($CO_2$), Ethan ($C_2H_6$), Propan ($C_3H_8$), Schwefelwasserstoff ($H_2S$), Ammoniak ($NH_3$), Methylenchlorid ($CH_3Cl$), Schwefeldioxid ($SO_2$) und Schwefelhexafluorid ($SF_6$) umfassenden Gruppe ausgewählt sein. Beim Einsatz der erfindungsgemäßen Gasfeder in Kraftfahrzeugen, in Bürostühlen und dergleichen mit dem Menschen mehr oder weniger unmittelbar in Berührung kommenden Gerätschaften sind selbstverständlich noch eine Reihe weiterer Auswahlkriterien zu beachten, beispielsweise die Entflamm- bzw. Brennbarkeit, die Toxizität, die Umweltverträglichkeit und dergleichen mehr. Unter Berücksichtigung all dieser Kriterien ist vor allem der Einsatz von Kohlendioxid ($CO_2$) oder Schwefelhexafluorid ($SF_6$) vorteilhaft, wobei Kohlendioxid ($CO_2$) über eine deutlich höhere nutzbare Volumenausdehnung verfügt.

Ferner hat es sich als vorteilhaft erwiesen, wenn die Gasfeder derart ausgelegt ist, dass bei einer die kritische Temperatur des Ausgleichmediums übersteigenden Betriebstemperatur der Gasfeder der Druck im Ausgleichsraum stets größer ist als der kritische Druck des Ausgleichsmediums.

Auch wenn im Zusammenhang mit der vorliegenden Erfindung grundsätzlich die Verwendung des erfindungsgemäßen Ausgleichmediums in Alleinstellung bevorzugt ist, um das gesamte zur Verfügung stehende Volumen des Ausgleichsraums zur temperaturabhängigen Dehnung und damit Verstellung des Ausgleichskolbens nutzen zu können, kann es in Sonderfällen wünschenswert sein, in den Ausgleichsraum ein Stoffgemisch aus wenigstens zwei Stoffen einzubringen, wobei wenigstens einer der Stoffe ein Ausgleichmedium mit den erfindungsgemäßen Eigenschaften ist. Dies kann beispielsweise dann vorteilhaft sein, wenn die Abmessungen der Gasfeder und damit beispielsweise auch das Volumen des Ausgleichsraums durch äußere Vorgaben festgelegt sind, zur Erzielung des gewünschten Effekts aber nur ein Teilvolumen mit dem Ausgleichsmedium gefüllt werden muss.

Neben den vorstehend diskutierten Nachteilen weisen die aus den eingangs genannten Druckschriften bekannten Gasfedern den weiteren Nachteil auf, einen aufwendigen Aufbau zu haben, der einen großen Bauraum benötigt, und dies insbesondere auf Grund der Ausbildung der Ausgleichskolbenanordnung. Beispielsweise ist bei der aus der DE 31 41 295 A1 bekannten Gasfeder ein in dem Arbeitszylinder verschiebbarer erster Kolben über ein Distanzstück mit einem zweiten Kolben verbunden, der in einem den Arbeitszylinder mit Abstand koaxial umschließenden Außenzylinder verschiebbar angeordnet ist und einen Rückstell- bzw. Federraum von dem Ausgleichsraum abtrennt.

Um die erfindungsgemäße Gasfeder derart weiter bilden zu können, dass sie wenige einfache Bauteile sowie einen geringen Bauraum benötigt, wird vorgeschlagen, dass sie ferner einen Ausgleichszylinder umfasst, der den Arbeitszylinder mit Abstand umschließt, sich mit seinem vom Arbeitsstangenaustrittsende der Gasfeder entfernten Ende über den Arbeitszylinder hinaus erstreckt und an diesem Ende geschlossen ist, wobei der Ausgleichsraum im Wesentlichen von dem Ringraum zwischen Arbeitszylinder und Ausgleichszylinder gebildet ist, und bei welcher die Ausgleichskolbenanordnung einen einzigen Ausgleichskolben umfasst, der in dem Ausgleichszylinder verschiebbar aufgenommen und topfförmig ausgebildet ist mit einem Topfboden und einem vom Topfboden in Richtung des Arbeitsstangenaustrittsendes abstehenden und mit dem Arbeitszylinder in Eingriff stehenden Zylinderabschnitt, wobei dieser Ausgleichskolben den Arbeitsraum, den Ausgleichsraum und den Rückstellraum voneinander trennt.

Durch diese Ausbildung erfolgt durch einen einzigen Ausgleichskolben sowohl eine Abgrenzung des Ausgleichsraums vom Arbeitsraum als auch eine Abgrenzung des Ausgleichsraums und des Arbeitsraums von dem Rückstellraum. Damit wird sowohl die Bauteilezahl als auch die Baulänge reduziert, da der Durchmesser des Arbeitsraums kleiner als der Durchmesser des Rückstellraums ist und damit durch einen geringen Verschiebeweg des Ausgleichskolbens ein großer Volumenzuwachs des Arbeitsraums erreicht wird.

Im Hinblick auf eine weitere Reduzierung der Baulänge der Gasfeder wird ferner vorgeschlagen, dass der Zylinderabschnitt des topfförmigen Ausgleichskolbens in den Ringraum zwischen dem Ausgleichszylinder und dem Arbeitszylinder eingreift. Auf diese Weise kann die gesamte Länge des Arbeitsraums für die Bewegung der Arbeitsstange genutzt werden.

Auf gesonderte Führungselemente zwischen Ausgleichskolben und Ausgleichszylinder kann beispielsweise dann verzichtet werden, wenn der Zylinderabschnitt des topfförmigen Ausgleichskolbens zumindest mit einem Teil seiner Außenumfangsfläche an der Innenumfangsfläche des Ausgleichszylinders anliegt. Dies trägt zur weiteren Vereinfachung des Aufbaus und somit zur Reduzierung der Bauteilezahl bei.

Dadurch, dass an dem in den Zylinderabschnitt des topfförmigen Ausgleichskolbens ragenden freien Ende des Arbeitszylinders eine flanschartige Erweiterung vorgesehen ist, auf der der Ausgleichskolben verschiebbar geführt ist, kann ein weiterer Auslegungsparameter zur Verfügung gestellt werden, der es erlaubt, die vom Ausgleichsmedium beaufschlagte Fläche des Ausgleichskolbens und das Volumen des Ausgleichsraums bei gegebener Länge des Ausgleichsraums unabhängig voneinander festzulegen.

Um Vibrationen und einem seitlichen Ausweichen des Arbeitszylinders relativ zum Ausgleichszylinder vorbeugen zu können, wird in Weiterbildung der Erfindung vorgeschlagen, dass in dem Ringraum zwischen Ausgleichszylinder und Arbeitszylinder wenigstens ein Stützelement vorgesehen ist, welches den Arbeitszylinder relativ zum Ausgleichszylinder in Position hält und welches wenigstens einen Durchgang für Ausgleichsmedium aufweist. Dabei kann der Ausgleichszylinder für wenigstens ein Stützelement wenigstens einen Anschlag aufweist, welcher einen vorbestimmten Mindestabstand des wenigstens einen Stützelements von dem Arbeitsstangenaustrittsende sicherstellt.

Zusätzlich oder alternativ kann am Zylinderabschnitt, vorzugsweise dessen freiem Ende benachbart, eine Mehrzahl von Stützansätzen für den Arbeitszylinder vorgesehen sein. Diese Stützansätze können sich nach radial innen zum Arbeitszylinder hin erstrecken und können beispielsweise als Knaggen ausgebildet sein.

Wie dies an sich bekannt ist, kann der Arbeitsraum durch einen mit der Arbeitsstange verbundenen Kolben in eine erste Arbeitskammer und eine zweite Arbeitskammer unterteilt sein, wobei die erste Arbeitskammer an die Ausgleichskolbenanordnung angrenzt und sich die Arbeitsstange durch die zweite Arbeitskammer erstreckt.

Ferner kann der Rückstellraum beispielsweise mit einem unter Druck stehenden Gas gefüllt sein, welches den Ausgleichskolben in Richtung einer Verringerung des Volumens des Arbeitsraums beaufschlagt. Hierdurch kann eine besonders kurze Baulänge der Gasfeder erzielt werden. Alternativ oder zusätzlich kann in dem Rückstellraum aber auch eine Federanordnung aufgenommen sein, welche auf den Ausgleichskolben einwirkt. Die Federanordnung kann dabei wenigstens eine Druckfeder, beispielsweise wenigstens eine Schraubendruckfeder, ein Tellerfederpaket oder dergleichen umfassen.

Die Erfindung wird im Folgenden an einigen Ausführungsbeispielen an Hand der beigefügten Zeichnung näher erläutert werden. Es stellt dar:

Figur 1      eine Gasfeder im Querschnitt;

Figur 2      einen Ausschnitt eines Ausgleichskolbens im Querschnitt;

Figur 3      eine Ansicht ähnlich Figur 2 einer abgewandelten Ausführungsform;

Figur 4      einen Ausschnitt von Arbeitszylinder, Ausgleichszylinder und Ausgleichskolben der Gasfeder nach Figur 1 im Querschnitt;

Figur 5      einen Ausschnitt eines zweiten Ausführungsbeispiels eines ausgleichskolbenseitigen Endes des Arbeitszylinders im Querschnitt;

Figur 6      einen Ausschnitt eines dritten Ausführungsbeispiels des ausgleichskolbenseitigen Endes des Arbeitszylinders im Querschnitt;

Figur 7      einen Ausschnitt eines vierten Ausführungsbeispiels des ausgleichskolbenseitigen Endes des Arbeitszylinders im Querschnitt;

Figur 8      einen Ausschnitt eines fünften Ausführungsbeispiels des ausgleichskolbenseitigen Endes des Arbeitszylinders im Querschnitt;

Figur 9      einen Ausschnitt eines sechsten Ausführungsbeispiels des ausgleichskolbenseitigen Endes des Arbeitszylinders im Querschnitt;

Figur 10     einen Ausschnitt eines siebten Ausführungsbeispiels des ausgleichskolbenseitigen Endes des Arbeitszylinders im Querschnitt;

Figur 11     einen Ausschnitt eines achten Ausführungsbeispiels des ausgleichskolbenseitigen Endes des Arbeitszylinders im Querschnitt;

Figur 12     einen Ausschnitt eines neunten Ausführungsbeispiels des ausgleichskolbenseitigen Endes des Arbeitszylinders im Querschnitt;

Figur 13    einen Ausschnitt eines zweiten Ausführungsbeispiels des kolbenstangenseitigen Endes der Gasfeder im Querschnitt;

Figur 14    einen Ausschnitt eines dritten Ausführungsbeispiels des kolbenstangenseitigen Endes der Gasfeder im Querschnitt;

Figur 15    einen Ausschnitt eines vierten Ausführungsbeispiels des kolbenstangenseitigen Endes der Gasfeder im Querschnitt;

Figur 16    einen Ausschnitt eines fünften Ausführungsbeispiels des kolbenstangenseitigen Endes der Gasfeder im Querschnitt;

Figur 17    einen Ausschnitt eines sechsten Ausführungsbeispiels des kolbenstangenseitigen Endes der Gasfeder im Querschnitt; und

Figur 18    einen Ausschnitt eines siebten Ausführungsbeispiels des kolbenstangenseitigen Endes der Gasfeder im Querschnitt.

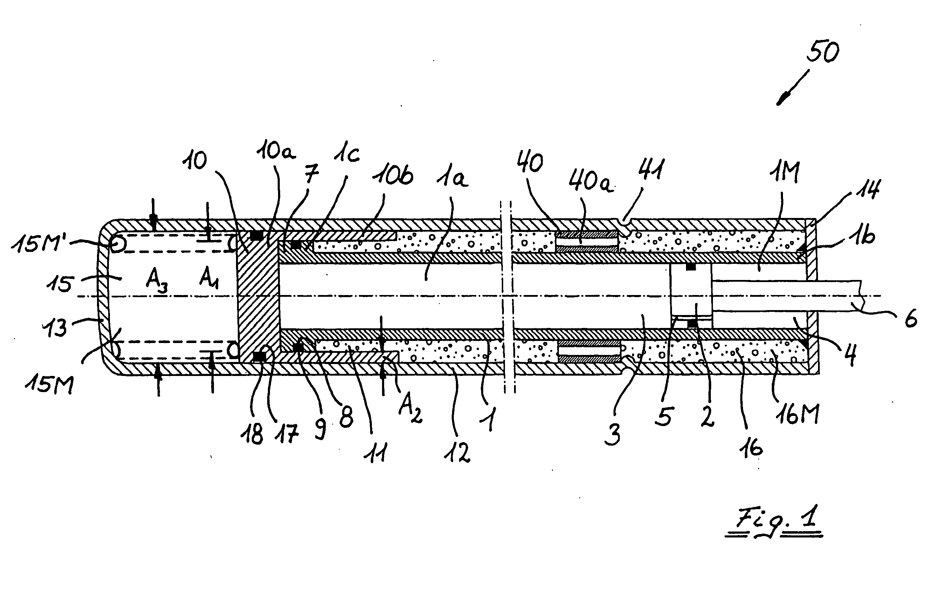

In Figur 1 ist eine erfindungsgemäße Gasfeder ganz allgemein mit 50 bezeichnet. Die Gasfeder 50 besitzt einen Arbeitszylinder 1, in dem ein Arbeitskolben 2 verschiebbar geführt ist. Der Arbeitskolben 2 unterteilt den Innenraum 1a des Arbeitszylinders 1 in eine erste Arbeitskammer 3 und eine zweite Arbeitskammer 4. An dem Arbeitskolben 2 ist eine Kolbenstange 6 befestigt, die die nach außen verschlossene zweite Arbeitskammer 4 durchsetzt und abgedichtet aus der Gasfeder 1 heraus geführt ist.

Um die Bewegung des Arbeitskolbens 2 in dem mit einem unter Druck stehenden Gas 1 M gefüllten Innenraum 1 a des Arbeitszylinders 1 dämpfen zu können, ist in dem Arbeitskolben 2 eine die erste Arbeitskammer 3 mit der zweiten Arbeitskammer 4 verbindende Drosselbohrung 5 vorgesehen. Zusätzlich oder alternativ zu dieser Drosselbohrung 5 könnte aber im Arbeitszylinder 1 auch wenigstens eine Längsnut ausgebildet sein.

Das dem Kolbenstangenaustrittsende 1 b entgegengesetzte, offene Ende 1 c des Arbeitszylinders 1 ist mittels eines topfförmigen Ausgleichskolbens 10 verschlossen. Der Ausgleichskolben 10 umfasst einen in dem dargestellten Ausführungsbeispiel kreisscheibenförmigen Topfboden 10a und einen vom Topfboden 10a in Richtung des Kolbenstangenaustrittsendes 1b abstehenden Zylinderabschnitt 10b. Der Zylinderabschnitt 10b, dessen Innenraum die Topföffnung 11 des Ausgleichskolbens 10 bildet, ist auf der Außenumfangsfläche des Arbeitszylinders 1 geführt. Und zwar besitzt der Arbeitszylinder 1 an seinem Ende 1c eine flanschartige Erweiterung 7, in deren radial äußerer, umlaufender Mantelfläche eine Ringnut 8 vorgesehen ist, in die ein O-Ring 9 eingesetzt ist. Auf dieser flanschartigen Erweiterung 7 des Endes 1 c des Arbeitszylinders 1 ist der Zylinderabschnitt 10b des Ausgleichskolbens 10 verschiebbar und durch den O-Ring 9 abgedichtet geführt.

Das unter Druck stehende Gas 1M im Innenraum 1a des Arbeitszylinders 1 beaufschlagt den Ausgleichskolben 10 auf der Fläche $A_1$, da selbst bei der in Figur 1 dargestellten Anlage des Ausgleichskolbens 10 am freien Ende 1 c des Arbeitszylinders 1 das Gas 1 M in den Anlagespalt zwischen Ausgleichskolben 10 und Arbeitszylinder 1 eindringt. Der Druck dieses Gases 1 M übt auf den Ausgleichskolben 10 eine im Sinne einer Vergrößerung des Innenraums 1a des Arbeitszylinders 1 gerichtete Kraft aus.

Darüber hinaus ist der Ausgleichskolben 10 ist mit seiner äußeren zylindrischen Mantelfläche in einem Ausgleichszylinder 12 axial verschiebbar angeordnet, der den Arbeitszylinder 1 mit Abstand koaxial umschließt und an seinem der Kolbenstange 6 abgewandten Ende durch einen Boden 13 verschlossen ist. Eine Verschlussscheibe 14 verschließt kolbenstangenseitig sowohl den Arbeitszylinder 1 als auch den Ausgleichszylinder 12, so dass die Außenabdichtung der Kolbenstange 6 zur Atmosphäre von der Abdichtung des Ausgleichsraumes 16 nach außen statisch, d.h. ohne bewegliche Teile ausgeführt ist.

Der zwischen dem Arbeitszylinder 1 und dem Ausgleichszylinder 12 gebildete Ringraum 16 ist mit einem Ausgleichsmedium 16M gefüllt, das sich bei Temperaturerhöhung ausdehnt, d.h. in seinem Volumen vergrößert. Das Ausgleichsmedium 16M beaufschlagt den Ausgleichskolben 10 auf der Stirnfläche $A_2$ des Zylinderabschnitts 10b und übt auf diesen eine im Sinne einer Vergrößerung des Innenraums 1a des Arbeitszylinders 1 gerichtete Kraft aus.

Zur Abdichtung des Ausgleichsraumes 16 gegenüber einem zwischen dem Ausgleichskolben 10 und dem Boden 13 gebildeten und mit einem unter Druck stehenden Gas 15M gefüllten Rückstellraum 15 weist der Ausgleichskolben 10 an seiner äußeren Mantelfläche eine radial umlaufende Nut 17 auf, in die eine Ringdichtung 18 eingesetzt ist. Daher beaufschlagt das unter Druck stehende Gas 15M im Rückstellraum 15 den Ausgleichskolben 10 auf der Fläche $A_3$ und übt auf diesen eine im Sinne einer Verkleinerung des Innenraums 1 a des Arbeitszylinders 1 gerichtete Kraft aus.

Die Vorspannung des Ausgleichskolbens 10 in Richtung auf das freie Ende 1 c des Arbeitszylinders 1 zu könnte zusätzlich oder alternativ zum Vorsehen des unter Druck stehenden Gases 15M in dem Rückstellraum 15 auch durch das Anordnen wenigstens einer auf den Ausgleichskolben 10 einwirkenden Druckfeder 15M' im Rückstellraum 15 oder/und wenigstens einer mit dem Ausgleichskolben 10 verbundenen Zugfeder im Ausgleichsraum 16 bewerkstelligt werden.

Wie vorstehend bereits erwähnt, ist der Innenraum 1a des Arbeitszylinders 1 mit einem unter Druck stehenden Gas 1 M gefüllt, so dass der Ausgleichskolben 10 in den Ausgleichszylinder 12 hinein, d.h. im Sinne einer Verkleinerung des Rückstellraums 15, vorgespannt ist. Der Druck des im Rückstellraum 15 vorgesehenen Gases 15M und die Beaufschlagungsflächen $A_1$ und $A_3$ sind so gewählt bzw. ausgelegt, dass eine auf den Ausgleichskolben 10 im Sinne einer Vergrößerung des Rückstellraums 15 wirkende Kraft immer, d.h. insbesondere unabhängig von der Stellung des Arbeitskolbens 2 im Innenraum 1a des Arbeitszylinders 1, größer ist als die Kraft, die durch den Druck im Innenraum 1 a des Arbeitszylinders 1 auf den Ausgleichskolben 10 einwirkt.

Nachzutragen ist noch, dass ferner ein Stützelement 40 vorgesehen ist, welches den Arbeitszylinder 1 an dem Ausgleichszylinder 12 abstützt und relativ zu diesem in Position hält. Das Stützelement 40 weist wenigstens einen Durchgang 40a für Ausgleichsmedium 16M auf, der den Durchtritt von Ausgleichsmedium 16M möglichst wenig behindert. Mittels einer Sicke 41 des Ausgleichszylinders 12 ist sichergestellt, dass das Stützelement 40 von dem kolbenstangenseitigen Ende 1 b des Arbeitszylinders 1 stets einen vorbestimmten Mindestabstand hält. Selbstverständlich kann auch eine Mehrzahl derartiger Abstandselemente vorgesehen sein.

Um eine optimale Ausnutzung des Ausgleichsmediums 16M zu erreichen, befindet sich der Ausgleichskolben 10 bei der tiefsten für den Betrieb der Gasfeder 50 vorgesehen Temperatur von z.B. -30°C nahe an dem stirnseitigen Ende 1 c der flanschartigen Erweiterung 7. Dies bedeutet auch das kleinstmögliche Volumen des Innenraums 1a des Arbeitszylinders 1.

Kommt es zu einem Anstieg der Umgebungstemperatur, so dehnt sich das Ausgleichsmedium 16M aus und verlagert den Ausgleichskolben 10 in Richtung zum Boden 13 des Ausgleichszylinders 12, d.h. im Sinne einer Verkleinerung des Rückstellraums 15. Dadurch wird der Innenraum 1 a des Arbeitszylinders 1 vergrößert. Daher steigt der Druck, der in Folge des Temperaturanstiegs im Innenraum 1a des Arbeitszylinders 1 bei konstantem Volumen des Innenraums 1 a eigentlich steigen würde, nicht oder nur in einem geringeren Maß an, weil die Volumenvergrößerung des Innenraums 1a des Arbeitszylinders 1 den Auswirkungen der Temperaturerhöhung entgegenwirkt.

Als Ausgleichsmedium 16M wird erfindungsgemäß bevorzugt Kohlendioxid ($CO_2$) eingesetzt, das durch entsprechende Auslegung der Geometrie bzw. der Abmessungen der Gasfeder 50 und deren Bauteile in dem Ausgleichsraum 16 unter einem so hohen Druck gehalten wird, dass sich sein Zustandspunkt im Druck-Temperatur-Diagramm (p-T-Diagramm) in dem üblichen Betriebstemperaturbereich von Gasfedern, d.h. zwischen einer unteren Grenztemperatur $T_u$ von etwa -30°C und einer oberen Grenztemperatur $T_o$ von etwa +80°C, stets oberhalb oder allenfalls auf der Dampfdruckkurve befindet. Die Tatsachen, dass die kritische Temperatur $T_k$ von Kohlendioxid etwa 31°C beträgt und damit in dem betrachteten Betriebstemperaturbereich liegt, und dass man bei Temperaturen oberhalb der kritischen Temperatur nicht mehr zwischen gasförmiger und flüssiger Phase unterscheiden kann, hat wider Erwarten keine nachteiligen Auswirkungen auf die gewünscht hohe nutzbare Volumenausdehnung, da die Dichte des Kohlendioxids bei den hier relevanten Drücken so hoch ist, dass es sich im Wesentlichen wie eine Flüssigkeit verhält. Durch die erfindungsgemäße Bemessung der Gasfeder 50 ist sogar sichergestellt, dass der Druck des Kohlendioxids bei Temperaturen oberhalb der kritischen Temperatur $T_k$ stets oberhalb des kritischen Drucks $p_k$ von Kohlendioxid liegt, der 73,8 bar beträgt.

Unter der "nutzbaren Volumenausdehnung $\Delta V$" oder genauer gesagt der "relativen nutzbaren Volumenausdehnung $\Delta V/V$" wird im Zusammenhang mit der vorliegenden Erfindung die Differenz der von einem Temperaturanstieg hervorgerufenen Volumenerhöhung und der durch den gleichzeitigen Druckanstieg hervorgerufenen Volumenminderung verstanden, d.h.

$$\Delta V/V \;=\; (T_o - T_u) \cdot \gamma \;-\; (p_o - p_u) \cdot \alpha,$$

wobei

$T_o$    die obere Grenztemperatur des Betriebstemperaturbereichs,
$T_u$    die untere Grenztemperatur des Betriebstemperaturbereichs,
$p_o$    den Druck im Ausgleichsraum bei der oberen Grenztemperatur,
$p_u$    den Druck im Ausgleichsraum bei der unteren Grenztemperatur,
$\gamma$    den Volumenausdehnungskoeffizienten des Ausgleichsmediums

und

α    den Kompressibilitätsfaktor des Ausgleichsmediums

bezeichnen.

Die relative nutzbare Volumenausdehnung ΔV/V des als Vergleichsmedium herangezogenen mineralischen Öls beträgt in dem vorstehend angegebenen Betriebstemperaturbereich etwa 6,2%.

Im Gegensatz hierzu bietet Kohlendioxid eine relative nutzbare Volumenausdehnung ΔV/V von 31,8%. Überdies bietet Kohlendioxid die Vorteile, kostengünstig erhältlich, nicht giftig, umweltverträglich, nicht brennbar und selbst im Gemisch mit anderen Stoffen, insbesondere Luft, nicht explosiv zu sein.

Als weitere Ausgleichsmedien 16M, die in mit Menschen mittelbar oder unmittelbar in Berührung kommenden Gasfedern ohne Weiteres eingesetzt werden können, sind Distickstoffoxid ($N_2O$) und Schwefelhexafluorid ($SF_6$) zu nennen. Die kritische Temperatur $T_k$ von Distickstoffoxid ($N_2O$) beträgt etwa 46,4°C und sein kritischer Druck $p_k$ etwa 72,5 bar. Ferner bietet Distickstoffoxid eine relative nutzbare Volumenausdehnung ΔV/V von etwa 26%, was nur geringfügig unter jener von Kohlendioxid liegt. Die kritische Temperatur $T_k$ von Schwefelhexafluorid ($SF_6$) beträgt etwa 45,6°C und sein kritischer Druck $p_k$ etwa 37 bar. Ferner bietet Schwefelhexafluorid eine relative nutzbare Volumenausdehnung ΔV/V von etwa 10,7%, was zwar unter jener von Kohlendioxid, aber immer noch deutlich über jener von mineralischem Öl liegt.

Für Sonderanwendungen, bei denen Eigenschaften, wie Brennbarkeit, Explosivität, Toxizität, eine mögliche Geruchsbelästigung und dergleichen, keine einschränkenden Eigenschaften oder gar Ausschlusskriterien darstellen, können überdies auch Ethan, Propan, Schwefelwasserstoff, Ammoniak, Methylenchlorid und Schwefeldioxid eingesetzt werden. Die Parameter dieser Stoffe sind in der nachfolgenden Tabelle 1 aufgeführt.

Tabelle 1:

|  | $T_k$ [°C] | $p_k$ [bar] | ΔV/V [%] |
|---|---|---|---|
| Ethan | 32,1 | 50,3 | 16,1 |
| Propan | 96,9 | 43,6 | 13,0 |
| Schwefelwasserstoff | 100,4 | 89,0 | 19,7 |
| Ammoniak | 132,4 | 113,0 | 22,6 |
| Methylenchlorid | 143,0 | 68,9 | 14,6 |
| Schwefeldioxid | 157,5 | 80,3 | 16,6 |

An dieser Stelle sei darauf hingewiesen, dass die vorstehend angegebenen Werte für die relative nutzbare Volumenausdehnung ΔV/V auf Grundlage der vorstehend angegebenen Formel unter der vereinfachenden und von der tatsächlichen Konstruktion der Gasfeder unabhängigen Annahme berechnet worden sind, dass der Druck im Ausgleichsraum 16 bei der oberen Grenztemperatur von +80°C etwa 440 bar und bei der unteren Grenztemperatur von -30°C etwa 50 bar beträgt. Die angegebenen Werte können daher lediglich größenordnungsmäßig einen Eindruck über die Eignung des einen oder anderen Stoffs als Ausgleichmedium vermitteln.

Im Folgenden sollen nun noch einige Ausführungsvarianten der erfindungsgemäßen Gasfeder näher erläutert werden:

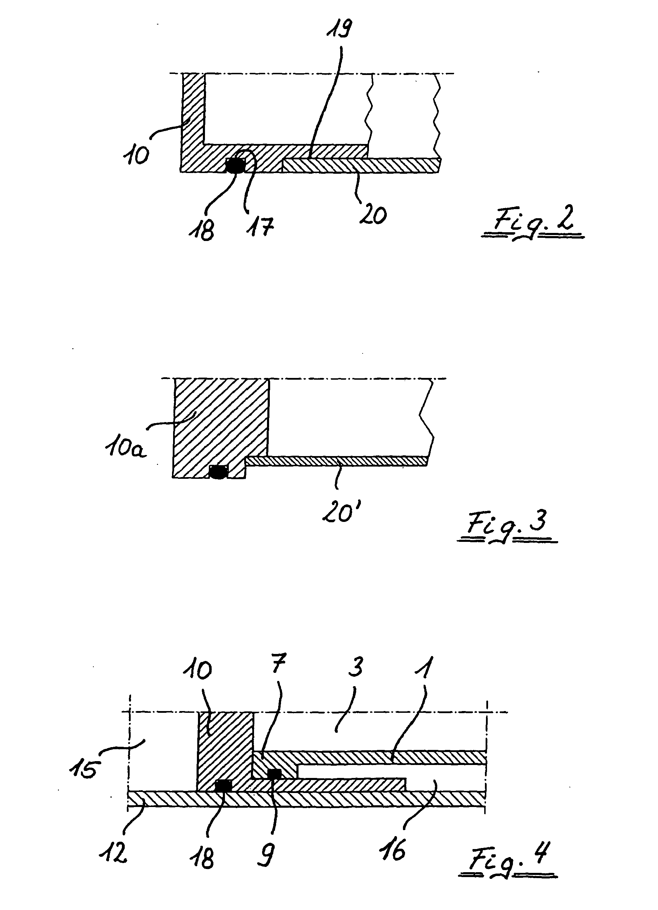

In den Figuren 1 und 4 ist der Ausgleichskolben 10 einteilig ausgeführt, während er in Figur 2 an seiner zylindrischen Mantelfläche eine radial umlaufende stufige Ringvertiefung 19 aufweist, in die eine die Topflänge vergrößernde Dichthülse 20 fest eingesetzt ist, die den gleichen Außendurchmesser aufweist, wie der Ausgleichskolben 10. Stirnseitig kann die Dichthülse 20 über ein nicht dargestelltes Dichtelement wie z.B. einen O-Ring gegenüber dem Ausgleichskolben 10 abgedichtet sein.

Obgleich der Ausgleichskolben 10 auch bei der Ausführungsform gemäß Figur 2 topfförmig ausgebildet ist, sei an dieser Stelle mit Bezug auf Figur 3 darauf hingewiesen, dass die Topfform grundsätzlich auch erst durch das Zusammenspiel eines im Wesentlichen scheibenförmigen Basisteils 10a und einer im Wesentlichen zylindrischen Hülse 20' gebildet sein kann. Reicht die Dicke des scheibenförmigen Basisteils 10a als Führungslänge des Ausgleichskolbens 10 im Ausgleichszylinder 12 aus, so braucht die Hülse 20' nicht notwendigerweise den gleichen Außendurchmesser aufzuweisen wie der Ausgleichskolben 10.

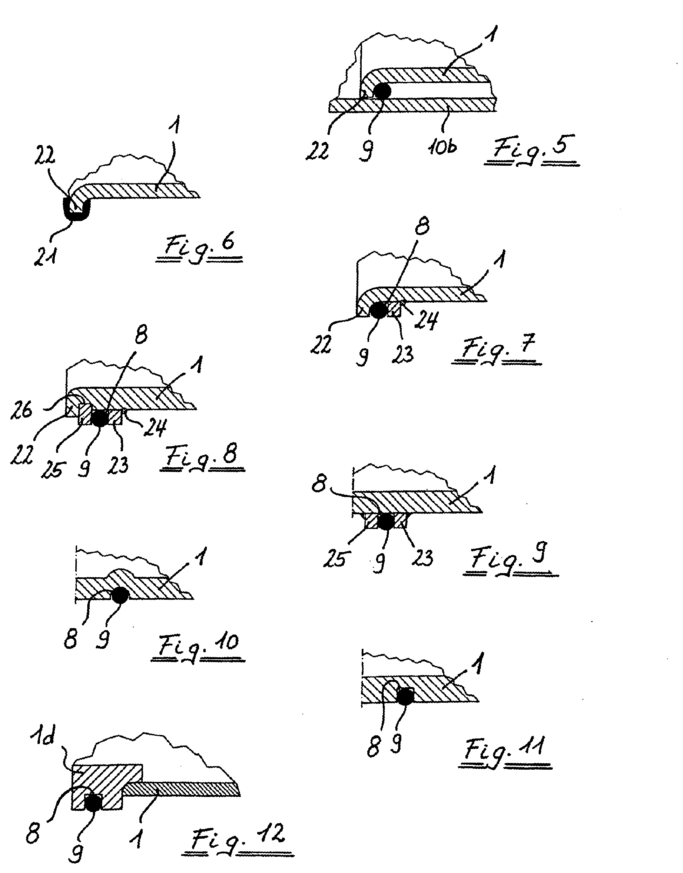

Die Figuren 5 bis 12 zeigen unterschiedliche Ausgestaltungen des ausgleichskolbenseitigen Endes des Arbeitszylinders 1 und dessen Abdichtung gegenüber dem Ausgleichskolben 10.

In Figur 5 ist das ausgleichskolbenseitige Ende 1 c des rohrartigen Arbeitszylinders 1 zu einem Flansch 22 radial nach außen umgeformt und nimmt in seiner Hohlkehle den O-Ring 9 auf.

Auch in den Figuren 6, 7 und 8 ist das ausgleichskolbenseitige Ende des rohrartigen Arbeitszylinders als Flansch 22 radial nach außen umgeformt. Dabei ist in Figur 6 ein Dichtring 21 mit einem U-Querschnitt auf den Flansch 22 aufgesteckt.

In Figur 7 ist in einem Abstand parallel zum Flansch 22 ein den Arbeitszylinder 1 umschließender Stützring 23 angeordnet und durch einen Sicherungsring 24 an dem Arbeitszylinder 1 gesichert. Der Ringspalt zwischen Flansch 22 und Stützring 23 bildet die den O-Ring 9 aufnehmende Ringnut 8.

In Figur 8 liegt im Abstand parallel zu dem durch den Sicherungsring 24 gesicherten Stützring 23 ein zweiter Stützring 25 an dem Flansch 22 an und ragt radial in eine Ringnut 26 im Arbeitszylinder 1. Zwischen den beiden Stützringen 23 und 25 ist die Ringnut 8 gebildet, die den O-Ring 9 aufnimmt.

In Figur 9 sind im Abstand parallel zueinander zwei Stützringe 23 und 25 auf die Mantelfläche des Arbeitszylinders 1 aufgeschweißt, die zwischen sich die den O-Ring 9 aufnehmende Ringnut 8 bilden.

Bei den Ausführungsbeispielen der Figuren 10 und 11 ist keine flanschartige Erweiterung vorhanden sondern Ringnuten 8 zur Aufnahme des O-Rings 9 in der Mantelfläche des Arbeitszylinders 1 ausgebildet. In Figur 10 ist die Ringnut durch radiale Verformung und in Figur 11 durch spanende Formung erzeugt.

Gemäß Figur 12 ist die den O-Ring 9 aufnehmende Ringnut 8 an einem gesonderten, mit dem Arbeitszylinder 1 jedoch betriebsfest verbundenen Teil 1d ausgebildet.

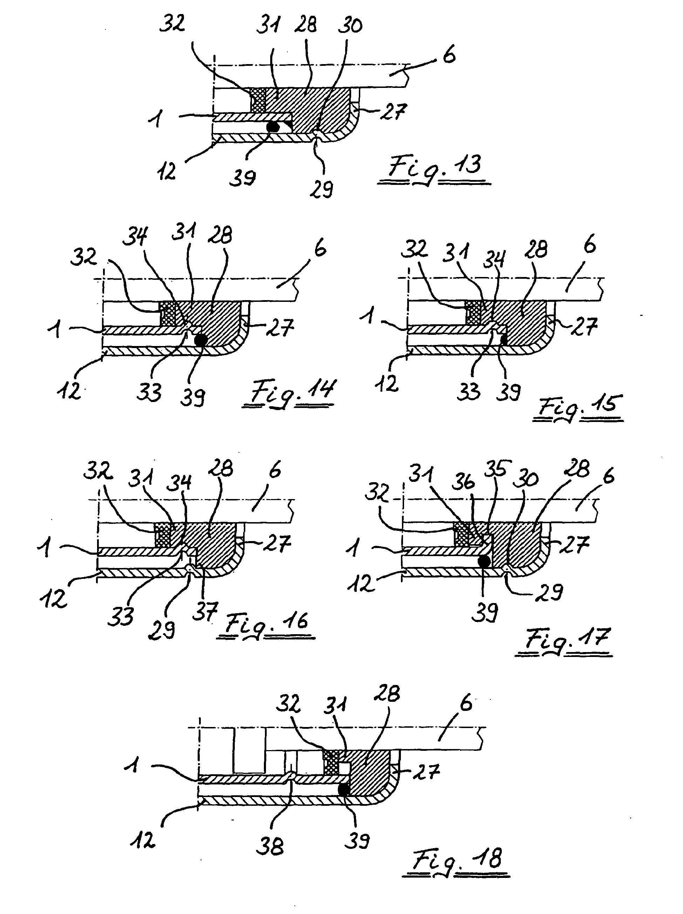

Die Figuren 13 bis 18 zeigen das kolbenstangenseitige Ende der Gasfeder 50.

Dabei ist das kolbenstangenseitige Ende des rohrartig ausgebildeten Ausgleichszylinders 12 zu einem radial nach innen gerichteten Flansch 27 umgeformt. An dem Flansch 27 ist ein ringförmiges Abstützelement 28 axial in Anlage. Das Abstützelement 28 wird an seiner radial umlaufenden Mantelfläche von dem Ausgleichszylinder 12 umschlossen, wobei bei den Ausführungsbeispielen der Figuren 13, 16 und 17 durch Verformen eine Sicke 29 im Ausgleichszylinder 12 erzeugt ist, die in den Figuren 13 und 17 radial in eine entsprechende Ausnehmung 30 des Abstützelements 28 eingreift.

Das in die Gasfeder ragende Ende des Abstützelements 28 besitzt eine im Durchmesser auf den Innendurchmesser des Arbeitszylinders 1 reduzierte Stufe 31, die in das Ende des Arbeitszylinders 1 eingreift.

Ein ringförmiges Dichtelement 32 ist stirnseitig an dem Abstützelement 28 abgestützt und liegt radial innen an der Kolbenstange 6 und radial außen an der Innenwand des Arbeitszylinders 1 an.

In Figur 13 ist der Arbeitszylinder mit dem Abstützelement 28 verschweißt, während bei den Ausführungsbeispielen der Figuren 14 bis 16 durch Verformen des Arbeitszylinders 1 eine radial nach innen gerichtete Sicke 33 erzeugt ist, die in eine entsprechende Ausnehmung 34 in der Stufe 31 des Abstützelements 28 eingreift.

In Figur 17 besitzt die Stufe 31 des Abstützelements 28 an ihrer radial umlaufenden Mantelfläche eine Ringnut 35, in die eine flanschartige, radial nach innen gerichtete Umformung 36 des Endes des Arbeitszylinders 1 eingreift.

An der Sicke 29 in Figur 16 ist die zur Stufe 31 führende Schulter 37 des Abstützelements 28 in Anlage.

In Figur 18 ist in einem axialen Abstand zum Dichtelement 32 eine durch Verformen des Arbeitszylinders 1 erzeugte, radial nach innen gerichtete Sicke 38 ausgebildet, die einen die Ausfahrbewegung des Kolbens 2 begrenzenden Anschlag bildet.

In den Figuren 13 bis 15 und 17 bis 18 ist in dem Ausgleichsraum 16 nahe dem Abstützelement 28 oder an diesem axial anliegend ein Dichtring 39 angeordnet, der radial nach innen an der Außenwand des Arbeitszylinders 1 und radial nach außen an der Innenwand des Ausgleichszylinders 2 in Anlage ist und den Ausgleichsraum 16 zum Abstützelement 28 hin abdichtet.

**Patentansprüche**

1. Gasfeder (50), umfassend

- einen Arbeitszylinder (1), der zusammen mit einer Ausgleichskolbenanordnung (10) einen mit einem Arbeitsmedium (1M) gefüllten Arbeitsraum (1a) umgrenzt, und
- eine Arbeitsstange (6), die durch eine Öffnung des Arbeitszylinders (1) verschiebbar in den Arbeitsraum (1 a) hineinragt,

wobei die Ausgleichskolbenanordnung (10) von dem Druck des Arbeitsmediums (1 M) und dem Druck eines in einem Ausgleichsraum (16) vorgesehenen, sich bei Temperaturerhöhung ausdehnenden Ausgleichsmediums (16M) in einem das Volumen des Arbeitsraum (1a) vergrößernden Sinne und von einem in einem Rückstellraum (15) vorgesehenen Rückstellmedium (15M) in einem das Volumen des Arbeitsraum (1) verkleinerndern Sinne beaufschlagt ist,

**dadurch gekennzeichnet, dass** das Ausgleichsmedium (16M) so gewählt ist, dass seine kritische Temperatur ($T_K$) zwischen einer ersten Temperatur ($T_1$) und einer zweiten Temperatur ($T_2$) liegt, wobei die erste Temperatur ($T_1$) im Wesentlichen gleich der unteren Grenztemperatur ($T_u$) eines Betriebstemperaturbereichs der Gasfeder (50) ist, und wobei die zweite Temperatur ($T_2$) die obere Grenztemperatur ($T_o$) des Betriebstemperaturbereichs der Gasfeder (50) um etwa 100°C übersteigt, und dass die Beaufschlagungsfläche ($A_2$) der Ausgleichskolbenanordnung (10) durch das Ausgleichsmedium (16M), die Beaufschlagungsfläche ($A_1$) der Ausgleichskolbenanordnung (10) durch das Arbeitsmedium (1M), das Volumen des Arbeitsraums (1a) bei einer Auslegungstemperatur der Gasfeder (50), das Volumen des Ausgleichsraums (16) bei der Auslegungstemperatur der Gasfeder (50) und die die Ausgleichskolbenanordnung (10) beaufschlagende Rückstellkraft des Rückstellmediums (15M) bei der Auslegungstemperatur der Gasfeder (50) derart bemessen und aufeinander abgestimmt sind, dass bei einer die kritische Temperatur ($T_K$) des Ausgleichmediums (16M) nicht übersteigenden Betriebstemperatur ($T_B$) der Gasfeder (50) der Zustandspunkt des Ausgleichsmediums (16M) auf oder oberhalb der Dampfdruckkurve liegt.

2. Gasfeder nach Anspruch 1,
   **dadurch gekennzeichnet, dass** die zweite Temperatur ($T_2$) die obere Grenztemperatur ($T_o$) des Betriebstemperaturbereichs der Gasfeder (50) um etwa 60°C übersteigt, vorzugsweise im Wesentlichen gleich der oberen Grenztemperatur ($T_o$) des Betriebstemperaturbereichs der Gasfeder (50) ist.

3. Gasfeder nach Anspruch 1 oder 2,
   **dadurch gekennzeichnet, dass** das Ausgleichsmedium (16M) aus der die Stoffe Kohlendioxid, Ethan, Propan, Schwefelwasserstoff, Ammoniak, Methylenchlorid, Schwefeldioxid, Schwefelhexafluorid und Distickstoffoxid umfassenden Gruppe ausgewählt ist.

4. Gasfeder nach einem der Ansprüche 1 bis 3,
   **dadurch gekennzeichnet, dass** bei einer die kritische Temperatur ($T_K$) des Ausgleichmediums (16M) übersteigenden Betriebstemperatur der Gasfeder (50) der Druck im Ausgleichsraum (16) stets größer ist als der kritische Druck ($p_K$) des Ausgleichsmediums.

5. Gasfeder nach einem der Ansprüche 1 bis 4,
   **dadurch gekennzeichnet, dass** sie ferner einen Ausgleichszylinder (12) umfasst, der den Arbeitszylinder (1) mit Abstand umschließt, sich mit seinem vom Arbeitsstangenaustrittsende (1 b) der Gasfeder (50) entfernten Ende (1 c) über den Arbeitszylinder (1) hinaus erstreckt und an diesem Ende geschlossen ist, wobei der Ausgleichsraum (16) im Wesentlichen von dem Ringraum zwischen Arbeitszylinder (1) und Ausgleichszylinder (12) gebildet ist, und dass die Ausgleichskolbenanordnung einen einzigen Ausgleichskolben (10) umfasst, der in dem Ausgleichszylinder (12) verschiebbar aufgenommen und topfförmig ausgebildet ist mit einem Topfboden (10a) und einem vom Topfboden (10a) in Richtung des Arbeitsstangenaustrittsendes (1b) abstehenden und mit dem Arbeitszylinder (1) in Eingriff stehenden Zylinderabschnitt (10b), wobei dieser Ausgleichskolben (10) den Arbeitsraum (1a), den Ausgleichsraum (16) und den Rückstellraum (15) voneinander trennt.

6. Gasfeder nach Anspruch 5,
   **dadurch gekennzeichnet, dass** der Zylinderabschnitt (10b) des Ausgleichskolbens (10) in den Ringraum (16) zwischen dem Ausgleichszylinder (12) und dem Arbeitszylinder (1) eingreift.

7. Gasfeder nach Anspruch 5 der 6,
   **dadurch gekennzeichnet, dass** der Zylinderabschnitt (10b) des Ausgleichskolbens (10) zumindest mit einem Teil seiner Außenumfangsfläche an der Innenumfangsfläche des Ausgleichszylinders (12) anliegt.

8. Gasfeder nach einem der Ansprüche 5 bis 7,
   **dadurch gekennzeichnet, dass** an dem in den Zylinderabschnitt (10b) des Ausgleichskolbens (10) ragenden freien Ende (1c) des Arbeitszylinders (1) eine flanschartige Erweiterung (7) vorgesehen, auf der der Ausgleichskolben (10) verschiebbar geführt ist.

9. Gasfeder nach einem der Ansprüche 5 bis 8,
   **dadurch gekennzeichnet, dass** in dem Ringraum (16) zwischen Ausgleichszylinder (12) und Arbeitszylinder (1) wenigstens ein Stützelement (40) vorgesehen ist, welches den Arbeitszylinder (1) relativ zum Ausgleichszylinder (12) in Position hält und welches wenigstens einen Durchgang (40a) für Ausgleichsmedium (16M) aufweist.

10. Gasfeder nach Anspruch 9,
    **dadurch gekennzeichnet, dass** der Ausgleichszylinder (12) für wenigstens ein Stützelement (40) wenigstens einen Anschlag (41) aufweist, welcher einen vorbestimmten Mindestabstand des wenigstens einen Stützelements (40) von dem Arbeitsstangenaustrittsende (1 b) sicherstellt.

**11.** Gasfeder nach einem der Ansprüche 5 bis 10,
**dadurch gekennzeichnet, dass** am Zylinderabschnitt (10b), vorzugsweise dessen freiem Ende benachbart, eine Mehrzahl von Stützansätzen für den Arbeitszylinder (1) vorgesehen ist.

**12.** Gasfeder nach einem der Ansprüche 1 bis 11,
**dadurch gekennzeichnet, dass** der Arbeitsraum (1a) durch einen mit der Arbeitsstange (6) verbundenen Kolben (2) in eine erste Arbeitskammer (3) und eine zweite Arbeitskammer (4) unterteilt ist, wobei die erste Arbeitskammer (3) an die Ausgleichskolbenanordnung (10) angrenzt und sich die Arbeitsstange (6) durch die zweite Arbeitskammer (4) erstreckt.

**13.** Gasfeder nach einem der Ansprüche 1 bis 12,
**dadurch gekennzeichnet, dass** das Rückstellmedium (15M) von einem im Rückstellraum (15) vorgesehenen, unter Druck stehenden Gas gebildet ist.

**14.** Gasfeder nach einem der Ansprüche 1 bis 12,
**dadurch gekennzeichnet, dass** das Rückstellmedium (15M') von einer Federanordnung gebildet ist.

**Claims**

**1.** Gas spring (50), comprising

- a working cylinder (1) which, together with a compensating piston arrangement (10), delimits a working chamber (1 a) filled with a working medium (1 M), and
- a working rod (6), which projects displaceably through an opening in the working cylinder (1) into the working chamber (1a),

wherein the compensating piston arrangement (10) is acted upon by the pressure of the working medium (1 M) and the pressure of a compensating medium (16M), which is provided in a compensating chamber (16) and expands if the temperature rises such that the volume of the working chamber (1a) increases, and by a restoring medium (15M), which is provided in a restoring chamber (15), such that the volume of the working chamber (1) decreases, **characterised in that** the compensating medium (16M) is selected so that its critical temperature ($T_K$) is between a first temperature ($T_1$) and a second temperature ($T_2$), whereby the first temperature ($T_1$) is substantially the same as the lower limit temperature ($T_u$) of a range of operating temperatures of the gas spring (50), and the second temperature ($T_2$) exceeds the upper limit temperature ($T_o$) of the range of operating temperatures of the gas spring (50) by approximately 100°C, and **in that** the surface ($A_2$) of the compensating piston arrangement (10) on which the compensating medium (16M) acts, the surface ($A_1$) of the compensating piston arrangement (10) on which the working medium (1 M) acts, the volume of the working chamber (1 a) at a set temperature of the gas spring (50), the volume of the compensating chamber (16) at the set temperature of the gas spring (50) and the restoring force of the restoring medium (15M) acting on the compensating piston arrangement (10) at the set temperature of the gas spring (50) are dimensioned and coordinated with one another such that at an operating temperature ($T_B$) of the gas spring (50), which does not exceed the critical temperature ($T_K$) of the compensating medium (16M), the point indicating the state of the compensating medium (16M) lies on or above the vapour pressure curve.

**2.** Gas spring according to claim 1,
**characterised in that** the second temperature ($T_2$) exceeds the upper limit temperature ($T_o$) of the range of operating temperatures of the gas spring (50) by approximately 60°C, and preferably is substantially the same as the upper limit temperature ($T_o$) of the range of operating temperatures of the gas spring (50).

**3.** Gas spring according to claim 1 or 2,
**characterised in that** the compensating medium (16M) is selected from a group comprising the substances carbon dioxide, ethane, propane, hydrogen sulphide, ammonia, methylene chloride, sulphur dioxide, sulphur hexafluoride and nitrous oxide.

**4.** Gas spring according to one of claims 1 to 3,
**characterised in that** at an operating temperature of the gas spring (50) exceeding the critical temperature ($T_K$) of the compensating medium (16M), the pressure in the compensating chamber (16) is always higher than the critical pressure ($p_K$) of the compensating medium.

5. Gas spring according to one of claims 1 to 4,
**characterised in that** it further comprises a compensating cylinder (12), which surrounds the working cylinder (1) at a spacing therefrom, extends beyond the working cylinder (1) with its end (1c) remote from the end (1 b) of the gas spring (50) at which the working rod comes out and is closed at this remote end, wherein the compensating chamber (16) is formed substantially by the annular chamber between the working cylinder (1) and the compensating cylinder (12), and **in that** the compensating piston arrangement comprises a single compensating piston (10), which is displaceably mounted in the compensating cylinder (12) and is in the form of a cup, with a cup base (10a) and a cylindrical portion (10b), which projects away from the cup base (10a) in the direction of the end (1 b) at which the working rod comes out, and which engages with the working cylinder (1), whereby said compensating rod (10) separates the working chamber (1a), the compensating chamber (16) and the restoring chamber (15) from one another.

6. Gas spring according to claim 5,
**characterised in that** the cylindrical portion (10b) of the compensating piston (10) engages in the annular chamber (16) between the compensating cylinder (12) and the working cylinder (1).

7. Gas spring according to claim 5 or 6,
**characterised in that** the cylindrical portion (10b) of the compensating piston (10) abuts, at least with a portion of its outer peripheral surface, against the inner peripheral surface of the compensating cylinder (12).

8. Gas spring according to one of claims 5 to 7,
**characterised in that** a flange-like widened portion (7) is provided at the free end (1 c) of the working cylinder (1), the end of which projects into the cylindrical portion (10b) of the compensating piston (10), and the compensating piston (10) is displaceably guided on this widened portion (7).

9. Gas spring according to one of claims 5 to 8,
**characterised in that** at least one supporting element (40) is provided in the annular chamber (16) between the compensating cylinder (12) and the working cylinder (1), and this at least one supporting element (40) keeps the working cylinder (1) in position relative to the compensating cylinder (12) and has at least one through bore (40a) for compensating medium (16M).

10. Gas spring according to claim 9,
**characterised in that** the compensating cylinder (12) has at least one stop (41) for at least one supporting element (40), and this at least one stop (41) ensures a predetermined minimum spacing between the at least one supporting element (40) and the end (1 b) at which the working rod comes out.

11. Gas spring according to one of claims 5 to 10,
**characterised in that** a plurality of supporting attached pieces for the working cylinder (1) are provided on the cylindrical portion (10b), preferably close to the free end thereof.

12. Gas spring according to one of claims 1 to 11,
**characterised in that** the working chamber (1a) is divided by a piston (2) connected to the working rod (6) into a first working chamber (3) and a second working chamber (4), with the first working chamber (3) adjacent to the compensating piston arrangement (10), and the working rod (6) extending through the second working chamber (4).

13. Gas spring according to one of claims 1 to 12,
**characterised in that** the restoring medium (15M) is formed by a pressurized gas which is provided in the restoring chamber (15).

14. Gas spring according to one of claims 1 to 12,
**characterised in that** the restoring medium (15M') is formed by a spring arrangement.

**Revendications**

1. Ressort à gaz (50), comportant :

- un cylindre de travail (1) qui, conjointement avec un système à piston d'équilibrage (10), délimite une chambre de travail (1a) contenant un fluide de travail (1 M), et
- une tige de travail (6), qui pénètre dans la chambre de travail (1a) en passant par un orifice du cylindre de travail (1),

le système à piston d'équilibrage (10) étant sollicité dans le sens d'une augmentation du volume de la chambre de travail (1a) par la pression du fluide de travail (1M) et par la pression d'un fluide compensateur (16M), prévu dans une chambre de compensation (16) et se dilatant en présence d'une augmentation de la température, et dans le sens d'une diminution du volume de la chambre de travail (1a) par un fluide de rappel (15M) prévu dans une chambre de rappel (15),

**caractérisé en ce que** le fluide compensateur (16M) est sélectionné de telle sorte que sa température critique ($T_K$) se situe entre une première température ($T_1$) et une deuxième température ($T_2$), la première température ($T_1$) étant sensiblement égale à la température limite inférieure ($T_U$) d'une plage de températures de fonctionnement du ressort à gaz (50) et la deuxième température ($T_2$) dépassant d'environ 100°C la température limite supérieure ($T_0$) de la plage de températures de fonctionnement du ressort à gaz (50), et **en ce que** la surface de sollicitation ($A_2$) du système à piston d'équilibrage (10) par le fluide compensateur (16M), la surface de sollicitation ($A_1$) du système à piston d'équilibrage (10) par le fluide de travail (1 M), le volume de la chambre de travail (1a) lorsque le ressort à gaz (50) se trouve à une température de référence, le volume de la chambre de compensation (16) lorsque le ressort à gaz (50) se trouve à une température de référence, et la force de rappel du fluide de rappel (15M) qui sollicite le système à piston d'équilibrage (10) lorsque le ressort à gaz (50) se trouve à une température de référence sont dimensionnés et harmonisés de telle sorte qu'à une température de fonctionnement ($T_B$) du ressort à gaz (50) ne dépassant pas la température critique ($T_K$) du fluide compensateur (16M), le point d'état du fluide compensateur (16M) se situe sur ou au-dessus de la courbe de pression de vapeur.

2. Ressort à gaz selon la revendication 1,
   **caractérisé en ce que** la deuxième température ($T_2$) dépasse la température limite supérieure ($T_0$) de la plage de températures de fonctionnement du ressort à gaz (50) d'environ 60°C, et est de préférence sensiblement égale à la température limite supérieure ($T_0$) de la plage de températures de fonctionnement du ressort à gaz (50).

3. Ressort à gaz selon la revendication 1 ou 2,
   **caractérisé en ce que** le fluide compensateur (16M) est constitué en un matériau choisi dans le groupe comprenant le dioxyde de carbone, l'éthane, le propane, l'acide sulfhydrique, l'ammoniac, le chlorure de méthylène, l'anhydride sulfureux, l'hexafluorure de soufre et l'oxyde d'azote.

4. Ressort à gaz selon l'une des revendications 1 à 3,
   **caractérisé en ce que** lorsque la température de fonctionnement du ressort à gaz (50) dépasse la température critique (TK) du fluide compensateur (16M), la pression qui règne dans la chambre de compensation (16) est toujours supérieure à la pression critique (pK) du fluide compensateur.

5. Ressort à gaz selon l'une des revendications 1 à 4
   **caractérisé en ce qu'**il comprend, en outre, un cylindre compensateur (12) qui entoure à distance le cylindre de travail (1), s'étend au-delà du cylindre de travail (1) par son extrémité éloignée de l'extrémité de sortie de la tige de travail (1 b) du ressort à gaz (50) et est fermé au niveau de ladite extrémité, la chambre de compensation (16) étant formée sensiblement par le compartiment annulaire entre le cylindre de travail (1) et le cylindre compensateur (12), et **en ce que** le système à piston d'équilibrage comporte un seul piston d'équilibrage (10), qui est monté de manière mobile en translation dans le cylindre compensateur (12) et est réalisé en forme de pot avec un fond (10a) et une partie cylindrique (10b) en saillie sur le fond (10a) vers l'extrémité de sortie de la tige de travail (1b) et est en prise avec le cylindre de travail (1), ledit piston d'équilibrage (10) séparant l'une de l'autre la chambre de travail (1a), la chambre de compensation (16) et la chambre de rappel (15).

6. Ressort à gaz selon la revendication 5,
   **caractérisé en ce que** la partie cylindrique (10b) du piston d'équilibrage (10) s'engage dans le compartiment annulaire (16) entre le cylindre compensateur (12) et le cylindre de travail (1).

7. Ressort à gaz selon la revendication 5 ou 6,
   **caractérisé en ce que** la partie cylindrique (10b) du piston d'équilibrage (10) est en appui avec au moins une partie de sa surface périphérique extérieure contre la surface périphérique intérieure du cylindre compensateur (12).

8. Ressort à gaz selon l'une des revendications 5 à 7,

**caractérisé en ce que** sur l'extrémité (1 c) libre du cylindre de travail (1), laquelle s'engage dans la partie cylindrique (10b) du piston d'équilibrage (10), est prévu un élargissement (7) en forme de collet, sur lequel le piston d'équilibrage (10) est guidé de manière mobile en translation.

9.  Ressort à gaz selon l'une des revendications 5 à 8,
    **caractérisé en ce que** dans le compartiment annulaire (16) entre le cylindre compensateur (12) et le cylindre de travail (1) est prévu au moins un élément d'appui (40), qui maintient le cylindre de travail (1) en position par rapport au cylindre compensateur (12) et qui comporte au moins un passage (40a) pour le fluide compensateur (16M).

10. Ressort à gaz selon la revendication 9,
    **caractérisé en ce que** le cylindre compensateur (12) comporte, pour au moins un élément d'appui (40), au moins une butée (41), qui garantit une distance minimale prédéterminée entre ledit au moins un élément d'appui (40) et l'extrémité de sortie de la tige de travail (1 b).

11. Ressort à gaz selon l'une des revendications 5 à 10,
    **caractérisé en ce qu'**il est prévu une pluralité de saillies d'appui pour le cylindre de travail (1) sur la partie cylindrique (10b), de préférence à proximité de l'extrémité libre de celle-ci.

12. Ressort à gaz selon l'une des revendications 1 à 11,
    **caractérisé en ce que** la chambre de travail (1a) est divisée en une première chambre de travail (3) et une deuxième chambre de travail (4) par un piston (2) relié à la tige de travail (6), la première chambre de travail (3) étant adjacente au système à piston d'équilibrage (10) et la tige de travail (6) passant à travers la deuxième chambre de travail (4).

13. Ressort à gaz selon l'une des revendications 1 à 12,
    **caractérisé en ce que** le fluide de rappel (15M) est formé par un gaz sous pression, prévu dans la chambre de rappel (15).

14. Ressort à gaz selon l'une des revendications 1 à 12,
    **caractérisé en ce que** le fluide de rappel (15M') est formé par un système de ressort.

_Fig. 1_

EP 1 734 276 B1

_Fig. 2_

_Fig. 3_

_Fig. 4_

22  1

_Fig. 6_

21

1

22  9  10b  _Fig. 5_

8

1

22  9  23  24  _Fig. 7_

8

1

26

22  25  9  23  24  _Fig. 8_

8

1

25  9  23  _Fig. 9_

1

8  9  _Fig. 10_

1

8  9  _Fig. 11_

1d

8  9  1  _Fig. 12_

16

Fig. 13

Fig. 14

Fig. 15

Fig. 16

Fig. 17

Fig. 18

**EP 1 734 276 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3141295 A1
- DE 2511289 A1
- US 4613115 A
- DE 10052864 A